# FASCICULE DE BREVET EUROPEEN

(11) **EP 3 392 595 B1**
(45) Date de publication et mention de la délivrance du brevet: **10.06.2020**
(21) Numéro de dépôt: 18167091.0
(22) Date de dépôt: 12.04.2018
(51) Int. Cl.: F28D 20/00

(54) **SYSTÈME DE DISTRIBUTION DE FLUIDE CALOPORTEUR POUR UN DISPOSITIF DE STOCKAGE D'ÉNERGIE THERMIQUE COMPORTANT DES SYSTÈMES THERMOSTATIQUES**
VERTEILUNGSSYSTEM EINES WÄRMEÜBERTRAGUNGSMITTELS FÜR EINE WÄRMEENERGIE-SPEICHERVORRICHTUNG, DIE THERMOSTATSYSTEME UMFASST
COOLANT DISTRIBUTION SYSTEM FOR A THERMAL ENERGY STORAGE DEVICE INCLUDING THERMOSTATIC SYSTEMS

(30) Priorité: 18.04.2017 FR 1753346
(43) Date de publication de la demande: 24.10.2018
(73) Titulaire: Commissariat à l'énergie atomique et aux énergies alternatives, 75015 Paris (FR)
(72) Inventeur: VESIN, Sébastien, 38100 GRENOBLE (FR); DUMOULIN, Pierre, 90340 CHEVREMONT (FR)
(74) Mandataire: Brevalex

(56) Documents cités:
- DE-A1- 2 947 995
- DE-A1- 19 816 037
- JP-A- S6 011 064

## Description

### DOMAINE TECHNIQUE

La présente invention se rapporte au domaine général du stockage d'énergie thermique, notamment par chaleur sensible, en particulier à des fins de stockage domestique et/ou de stockage pour un réseau de chaleur. Elle concerne plus spécifiquement le domaine des systèmes d'injection et/ou de soutirage d'un fluide caloporteur au sein d'un dispositif de stockage d'énergie thermique.

L'invention trouve de nombreuses applications dans le domaine du stockage d'énergie thermique, et en particulier pour le stockage d'énergie thermique à partir d'une source de chaleur à température variable, telle que des panneaux solaires, et pour la restitution de chaleur à température variable.

L'invention propose ainsi un système de distribution de fluide caloporteur pour un dispositif de stockage d'énergie thermique comportant des systèmes thermostatiques, un dispositif de stockage d'énergie thermique comportant un tel système de distribution et un réservoir de stockage thermique stratifié de fluide caloporteur, ainsi qu'un procédé associé de distribution de fluide caloporteur dans un dispositif de stockage d'energie.

Un système de distribution selon le préambule de la revendication 1 est connu par exemple du document DE 198 16 037.

### ÉTAT DE LA TECHNIQUE ANTÉRIEURE

Dans le cadre d'un dispositif de stockage d'énergie thermique par chaleur sensible, par exemple de type thermocline, hydro-accumulateur ou ballon d'eau chaude stratifié, alimenté en charge à une température constante, le fluide caloporteur chaud est injecté dans la partie haute du dispositif tandis que le fluide caloporteur froid est soutiré dans la partie basse du dispositif. Cette disposition permet, dans des conditions adéquates, de maintenir une stratification thermique à l'intérieur du dispositif de stockage d'énergie thermique par chaleur sensible. Lors de la décharge, l'écoulement est inversé de sorte à toujours maintenir la stratification thermique au sein du dispositif de stockage d'énergie thermique. Ainsi, lors de la décharge, le fluide caloporteur chaud est soutiré depuis la zone chaude située en partie haute du dispositif et le fluide caloporteur froid est renvoyé dans la zone froide située en partie basse du dispositif de stockage d'énergie thermique.

Cependant, lorsque la source chaude alimentant en chaleur le dispositif de stockage génère un débit de fluide caloporteur chaud à des températures variables, il est essentiel de pouvoir injecter le fluide caloporteur chaud dans la bonne strate thermique du dispositif de stockage afin de ne pas avoir de mélange au sein du dispositif de stockage entre des fluides caloporteurs chaud et froid qui pourrait dégrader la densité de stockage et la quantité d'énergie contenue au plus haut niveau de température dans la zone chaude située en partie haute du dispositif de stockage.

Un exemple typique est celui d'un panneau solaire thermique qui permet l'injection, en régime nominale, d'eau chaude à environ 90°C dans un ballon de stockage thermique. Toutefois, compte-tenu de l'intermittence de cette source de chaleur, il est possible que l'eau chaude générée n'atteigne pas la température du régime nominal. Dans ce cas, il est impératif que l'eau chaude générée soit distribuée dans le ballon de stockage thermique au niveau d'une strate thermique correspondant à sa température, sous peine dans le cas contraire d'injecter dans la zone chaude à environ 90°C en partie haute du ballon de stockage thermique une eau plus froide qui conduirait à sa dégradation et par voie de conséquence à la diminution de l'énergie stockée à haute température.

De même, le besoin en fluide caloporteur chaud lors de la décharge peut être différent. Ainsi, par exemple, la température de l'eau nécessaire à du chauffage domestique, à savoir une température basse de l'ordre de 40°C, est différente de la température de l'eau nécessaire à la réalisation de l'eau chaude sanitaire, à savoir une température de l'ordre de 65°C. Pour un même volume de stockage et profil thermique en début de décharge, le volume d'eau chaude sanitaire disponible serait réduit si l'eau utilisée pour le chauffage était puisée à 65°C.

Par conséquent, il existe un besoin pour permettre l'injection et le soutirage de fluide caloporteur au niveau de la bonne strate thermique du dispositif de stockage d'énergie thermique en fonction de la température de fluide caloporteur injecté ou soutiré.

Parmi les dispositifs de stockage d'énergie thermique existants, les plus connus concernent les besoins en énergie thermique pour des fins de chauffage et de production d'eau chaude sanitaire (ECS).

Ces stockages d'énergie thermique par chaleur sensible peuvent fonctionner en régime journalier ou en régime inter-saisonnier. En régime journalier, les charges et les décharges, autrement dit les injections et les soutirages, se réalisent sur l'ordre d'une journée, typiquement une charge pendant la journée grâce à l'énergie solaire et une décharge le reste du temps lorsqu'un besoin énergétique est demandé. En régime inter-saisonnier, les charges et les décharges se réalisent sur l'ordre d'une année, typiquement une charge pendant le printemps et l'été et des décharges pendant la période froide.

Ces stockages d'énergie thermique par chaleur sensible peuvent par ailleurs être à différentes échelles. Les stockages domestiques, tels que des ballons domestiques ou des chauffe-eaux solaires individuels, présentent un volume de quelques centaines de litres à quelques mètres cubes. Les stockages pour les réseaux de chaleur présentent quant à eux un volume de quelques centaines de mètres cubes à plusieurs dizaines de milliers de mètres cubes.

Dans tous les cas, la problématique de variation de température du fluide caloporteur injecté en charge et soutiré en décharge, et leurs impacts sur la stratification établie du stockage, et donc son efficacité, est la même que décrite précédemment. Il existe en effet un besoin pour tenter de pouvoir charger et décharger le fluide caloporteur en fonction de sa température d'entrée ou de demande et de l'altitude exacte où se situe la strate thermique d'énergie sensible à la même température.

Dans le processus de charge ou de décharge d'un réservoir thermique d'un dispositif de stockage thermique, les fonctions de distribution et de diffusion de fluide caloporteur peuvent être distinguées l'une de l'autre. En effet, d'une part la fonction de distribution de fluide caloporteur consiste en tant que telle à distribuer le fluide caloporteur à un certain niveau, ou une certaine hauteur, du stockage du réservoir, tandis que d'autre part la fonction de diffusion de fluide caloporteur vise à limiter l'impact de l'injection/soutirage de fluide caloporteur dans la strate de stockage où a lieu la distribution.

Par ailleurs, il est à noter que la distribution d'énergie thermique dans le réservoir du dispositif de stockage peut être réalisée de façon directe, c'est-à-dire que le fluide de stockage du réservoir et le fluide injecté/soutiré sont identiques, ou encore de façon indirecte, par le biais de la présence d'un échangeur de chaleur équipant le dispositif de stockage. La solution indirecte permet d'éviter la problématique de diffusion qui peut engendrer une déstratification du réservoir thermique par effet de jet. Toutefois, elle induit généralement une perte exergétique due à l'échange même de chaleur entre les deux fluides distincts.

Ainsi, considérant les fonctions de distribution et de diffusion décrites précédemment pour un réservoir thermique d'un dispositif de stockage thermique, des solutions sont déjà connues dans l'art antérieur.

En ce qui concerne la distribution de fluide caloporteur, plusieurs types de distributeurs sont connus.

Il existe ainsi notamment le principe de l'injection fixe, consistant à injecter le fluide chaud en partie haute du réservoir de stockage par le biais d'une canalisation fixe et à soutirer le fluide froid en partie basse du réservoir. Un tel système d'injection est simple de mise en œuvre et de conception, et s'avère intéressant lorsque les températures d'entrée sont constantes et que le débit est faible. Toutefois, il engendre une stratification de mauvaise qualité dans le cas de conditions d'entrée et de sortie du fluide complexes, telles que la présence d'une température variable ou un débit élevé.

Par ailleurs, on connaît également le principe de l'injection multi-niveaux par vanne trois voies à commandes externes, par exemple de type électrique, pneumatique, entre autres. Ce type d'injection est le plus répandu, et consiste en l'introduction du fluide caloporteur selon trois niveaux de température différents. La ou les vannes trois voies fonctionnent en tout ou rien, et sont régulées par la température de sortie du fluide. La mise en place d'une pluralité de vannes trois voies permet d'augmenter le nombre de strates d'injection dans le réservoir thermique. Cette technologie multi-niveaux permet d'obtenir au moins deux strates différentes de température dans le réservoir thermique, et elle est également robuste et fiable. Toutefois, son coût s'avère non négligeable et le fonctionnement en tout ou rien des vannes trois voies limite la régulation.

Il existe également le principe d'injection dit de la « canne de stratification » qui permet la distribution d'énergie par convection naturelle. Plus précisément, le fluide remonte à l'intérieur d'un tube thermosiphon (canne de stratification) percé de trous pour l'injection de fluide dans le réservoir. Par différence de masse volumique, le fluide circule dans la canne de stratification jusqu'à atteindre la hauteur de la strate de même température. Ce principe de fonctionnement permet donc l'établissement de strates tout au long du réservoir de stockage, donnant lieu à une large thermocline, mais à peu de brassage. Ce principe est également plus difficile à mettre en place. Par ailleurs, des installations peuvent être mises en place pour stopper la remontée de fluide dans la canne de stratification, telles que par exemple des clapets anti-retour ou des tubes inclinés. L'injection peut être réalisée de façon indirecte par le biais de l'utilisation d'un échangeur de chaleur.

Les cannes de stratification peuvent prendre différentes formes selon leur fabricant. On connaît ainsi le ballon à stratification active Stratos® de la société Solvis, qui comprend une pluralité de cannes de stratification, chacune couvrant des étages de température différents. On connaît également les ballons du type Conus® et Solus® de la société Consolar qui fonctionnent également à l'aide d'une canne de stratification. Plus précisément, un système d'échangeurs thermiques conçu sur le principe du thermosiphon permet d'établir un transfert thermique en contre-courant à très faibles pertes au sein du ballon. Ainsi, l'échangeur thermique supérieur réchauffe le fluide chaud en circulation. Le fluide du ballon se refroidit, et s'écoule par le tube d'écoulement vers la partie inférieure où il peut être chauffé à nouveau. En cas de faible rayonnement solaire, l'échangeur thermique situé dans la partie médiane et raccordé à une chaudière chauffe le tiers supérieur du ballon. Grâce à l'enveloppe conductrice de l'échangeur de chaleur d'appoint, la chaleur destinée à un appoint de chauffage ambiant est extraite de la partie médiane. Par grand soleil, le fluide caloporteur réchauffé est conduit par un tube de cuivre dans la partie inférieure de l'échangeur de chaleur. Par ailleurs, il existe également des accumulateurs à stratification des températures dynamiques tels que conçus par la société Ratiotherm, en particulier sous la référence Oskar®. Ainsi, différentes canalisations viennent se greffer à la canne de stratification sous forme de spirale et percée.

En outre, d'autres technologies sont actuellement en voie de développement, comme celles relatives à l'utilisation des manifolds (tubes poreux), prometteuses pour favoriser l'élaboration d'une stratification mais utilisant des matériaux plutôt adaptés à du stockage à faible échelle. Ainsi, les manifolds sont des matériaux pouvant se contracter ou se dilater selon les conditions, donnant ainsi la possibilité de libérer le fluide au bon niveau de pression. On connaît ainsi l'utilisation de manifolds sous la forme de tubes rigides poreux ou encore en tissu, l'inconvénient de tels matériaux venant surtout de leur faible épaisseur qui engendre de forts transferts thermiques à travers leur paroi.

De plus, il existe également des ballons solaires équipés de taules de stratification, qui sont destinées à séparer physiquement la partie chaude de la partie froide du ballon par la présence d'obstacles.

En ce qui concerne par ailleurs la fonction de diffusion de fluide caloporteur, et dans le cas de distributeurs à injection directe (donc sans échangeur de chaleur), il peut être intéressant de rajouter des diffuseurs ou brise-jets ayant pour fonction d'atténuer le phénomène de jet qui peut engendrer une dégradation de la stratification. Ainsi, diverses études ont été menées autour de cette problématique révélant que, d'une part pour les diffuseurs, il est possible de diminuer l'énergie cinétique et de permettre une bonne répartition du fluide caloporteur bien que ceux-ci ne permettent pas à eux seuls de régler le problème de la mise en place de la stratification et de son maintien, tandis que, d'autre part pour les brise-jets, il est possible de diminuer l'énergie cinétique bien que ceux-ci peuvent entraîner le brassage du fluide caloporteur injecté.

En outre, diverses autres solutions de conception de distributeurs, utilisant notamment le principe des cannes de stratification, et de diffuseurs de fluide dans un réservoir de stockage ont également été décrites dans la littérature brevet. A titres d'exemples, on peut ainsi citer la demande de brevet britannique GB 1 518 789 A qui décrit la possibilité d'adapter l'altitude d'un orifice d'un tube mobile, pour la charge et la décharge, à l'intérieur d'un réservoir de stockage d'énergie thermique en fonction de la température d'entrée de la charge ou de la température de consigne de la décharge. Par ailleurs, la demande de brevet allemand DE 199 53 492 A1 décrit l'utilisation de deux tubes concentriques dont la translation et la rotation permettent la concordance d'orifices d'injection. Cette solution induit la nécessité d'avoir des ouvertures très petites sur les tubes, et donc des vitesses d'injection importantes, ce qui est nuisible au maintien de la stratification établie, étant propice au mélange des couches de fluide de différentes températures. Le système décrit dans la demande de brevet allemand DE 199 53 492 A1 est basé sur un seul actionneur global, électrique ou pneumatique, couplé à des capteurs de température positionnés sur toute la hauteur de la thermocline. De plus, une recopie de position est nécessaire afin de garantir la robustesse du système. La solution proposée est donc très intrusive dans le réservoir de type thermocline et nécessite un système de pilotage.

### EXPOSÉ DE L'INVENTION

Il existe un besoin pour proposer une solution alternative améliorée de système de distribution de fluide caloporteur pour un dispositif de stockage d'énergie thermique, notamment par chaleur sensible, comportant un réservoir de stockage de fluide caloporteur thermiquement stratifié, afin de réaliser des charges et/ou décharges de fluide caloporteur à une température de consigne variable tout en empêchant, ou du moins en limitant fortement, la déstratification thermique au sein du réservoir de stockage.

L'invention a pour but de remédier au moins partiellement aux besoins mentionnés précédemment et aux inconvénients relatifs aux réalisations de l'art antérieur.

L'invention vise notamment à assurer une densité de stockage d'énergie thermique exploitable qui soit élevée dans un dispositif de stockage d'énergie thermique, notamment de type thermocline, par l'intermédiaire de l'usage d'éléments thermostatiques permettant l'injection et le soutirage de fluide caloporteur au bon endroit sur le dispositif de stockage d'énergie thermique.

L'invention a ainsi pour objet un système selon la revendication 1.

Par « réservoir de stockage thermique stratifié », on entend que le volume de fluide caloporteur contenu dans le réservoir de stockage thermique présente un gradient de température entre les deux extrémités du stockage. Autrement dit, le volume de fluide caloporteur du réservoir de stockage thermique peut être divisé en une multitude de couches thermiques superposées de fluide caloporteur présentant des températures différentes et graduelles depuis l'une des extrémités de stockage vers l'autre des extrémités de stockage, ces couches superposées formant ainsi des strates thermiques successives.

Grâce à l'invention, il peut être possible de distribuer le fluide caloporteur durant des phases de charge et/ou de décharge du réservoir de stockage thermique du dispositif de stockage d'énergie thermique tout en empêchant, ou du moins en minimisant, la perturbation de la stratification thermique au sein du réservoir pendant ces opérations.

De plus, l'invention peut permettre d'obtenir une injection précise et optimisée du fluide caloporteur dans le réservoir de stockage thermique, permettant en outre de travailler avec des conditions de stockage pour lesquelles des forts gradients de température sont présents, typiquement au niveau de la thermocline. Par ailleurs, l'invention peut permettre d'éviter l'usage d'actionneurs ou de capteurs, par exemple électriques et/ou pneumatiques, ainsi que d'un système de pilotage associé. L'invention peut également permettre une indépendance du pilotage de chaque strate thermique, impliquant une réduction de la hauteur ou de l'angle maximal de déplacement.

Le système de distribution selon l'invention peut en outre comporter l'une ou plusieurs des caractéristiques suivantes prises isolément ou suivant toutes combinaisons techniques possibles.

Le fluide caloporteur destiné à être distribué peut être de tout type, étant typiquement de l'eau.

De façon avantageuse, le système de distribution selon l'invention est un système de distribution à injection directe, le fluide caloporteur du réservoir de stockage thermique étant identique au fluide caloporteur injecté et/ou soutiré par le biais du système de distribution. En variante, le système de distribution selon l'invention peut encore être un système de distribution à injection indirecte, le fluide caloporteur du réservoir de stockage thermique étant distinct du fluide caloporteur injecté et/ou soutiré par le biais du système de distribution.

L'espacement entre les systèmes thermostatiques le long du support de distribution, en particulier selon la hauteur du réservoir de stockage thermique, peut être ou non régulier.

Les thermostats des systèmes thermostatiques peuvent être ou non identiques. Un choix identique peut permettre de simplifier la conception du système de distribution et également permettre une réduction des coûts.

De façon avantageuse, tous les systèmes thermostatiques du système de distribution selon l'invention peuvent être identiques, ce qui peut permettre de réaliser une standardisation des pièces.

Le support de distribution peut comporter, à une première de ses extrémités destinée à être située en partie haute du réservoir de stockage thermique, une première ouverture permettant la distribution de fluide caloporteur et, à une deuxième de ses extrémités, opposée à la première extrémité et destinée à être située en partie basse du réservoir de stockage thermique, une deuxième ouverture débouchante dans le réservoir de stockage thermique.

Chaque thermostat peut comporter un matériau de dilatation, avantageusement apte à se dilater de manière bijective, autrement dit à se dilater et à se contracter, en fonction de la température appliquée au thermostat auquel il est associé. La dilatation est sensiblement proportionnelle à la température appliquée. Le matériau de dilatation peut avantageusement être composé d'un mélange de matériaux à changement de phases, par exemple des paraffines.

Le système hydraulique peut en outre comporter un ou plusieurs organes de rappel élastique situés entre l'élément mobile de distribution et au moins l'un des premier et deuxième éléments sous forme de tige.

Au moins l'un des premier et deuxième thermostats, notamment le deuxième thermostat, peut comporter une résistance électrique intégrée apte à permettre le soutirage de fluide caloporteur en fonction d'une température de consigne de fluide caloporteur. La résistance électrique intégrée peut notamment être apte à fermer le premier espace de passage ou le deuxième espace de passage en fonction d'une température de consigne en cas de soutirage de fluide caloporteur. La résistance électrique a notamment pour objectif de forcer le chauffage de la paraffine du thermostat afin d'en augmenter artificiellement sa dilatation et donc faire en sorte que dans certaines situations de vie, la température de la paraffine soit supérieure à celle du fluide avec lequel elle est en contact.

En outre, l'invention a encore pour objet, selon un autre de ses aspects, un dispositif de stockage d'énergie thermique, caractérisé en ce qu'il comporte :
- un réservoir de stockage thermique stratifié comportant un fluide caloporteur pour le stockage d'énergie thermique, et
- un système de distribution de fluide caloporteur tel que défini précédemment, s'étendant à l'intérieur du réservoir de stockage thermique pour l'injection et/ou le soutirage de fluide caloporteur.

Le système de distribution selon l'invention peut par exemple consister en un assemblage préétabli, par exemple sous la forme d'une « cassette élémentaire », apte à être adapté dans le réservoir de stockage thermique, par exemple par clipsage ou assemblage, le support de distribution étant éventuellement déjà en place dans le réservoir de stockage thermique. Tout ou partie des éléments du système de distribution, notamment les éléments mobiles de distribution, peut comprendre des éléments souples, tels que des bavettes souples, permettant de faciliter l'insertion au sein du réservoir de stockage thermique, notamment au niveau d'un support de distribution déjà en place dans le réservoir de stockage thermique, tout en assurant l'étanchéité.

De façon préférée, le dispositif de stockage d'énergie thermique selon l'invention est un dispositif de stockage d'énergie thermique par chaleur sensible.

Par ailleurs, l'invention a également pour objet, selon un autre de ses aspects, un procédé de distribution de fluide caloporteur dans un dispositif de stockage d'énergie thermique, notamment par chaleur sensible, comportant un réservoir de stockage thermique stratifié de fluide caloporteur, pour l'injection et/ou le soutirage de fluide caloporteur au sein du réservoir de stockage thermique, caractérisé en ce qu'il est mis en œuvre au moyen d'un système de distribution tel que défini précédemment.

Le procédé de distribution selon l'invention comporte avantageusement l'étape consistant à injecter un fluide caloporteur dans une strate thermique du réservoir de stockage thermique de même température que le fluide caloporteur par le biais du système de distribution.

De plus, le procédé de distribution selon l'invention comporte avantageusement l'étape consistant à soutirer un fluide caloporteur de température prédéterminée depuis une strate thermique du réservoir de stockage thermique de même température que le fluide caloporteur par le biais du système de distribution.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 représente, schématiquement en coupe, un exemple de principe de dispositif de stockage d'énergie thermique comportant un système de distribution de fluide caloporteur conforme à l'invention,
- la figure 2 illustre, sous forme graphique, l'évolution du volume d'un matériau de dilatation d'un thermostat d'un système de distribution conforme à l'invention en fonction de la température appliquée audit matériau de dilatation,
- les figures 3A, 3B et 3C représentent trois configurations différentes d'un exemple de système de distribution conforme à l'invention pour une phase d'injection, représentatives de son comportement dans trois situations de vie, le système comportant, au niveau de chaque système thermostatique, des premier et deuxième thermostats couplés mécaniquement entre eux,
- les figures 4A et 4B représentent, schématiquement et en coupe, deux configurations différentes, ou encore deux situations de vie différentes, d'un autre exemple de dispositif de stockage d'énergie thermique comportant un système de istribution qui n'est pas conforme à l'invention et un réservoir de stockage thermique,
- les figures 5A à 5I représentent, schématiquement et en coupe, diverses configurations d'une variante de réalisation du système de distribution des figures 4A et 4B, et
- les figures 6A, 6B et 6C représentent trois configurations différentes d'un autre exemple de système de distribution conforme à l'invention constituant une variante de réalisation de l'exemple des figures 3A, 3B et 3C, avec l'ajout d'un thermostat avec résistance électrique intégrée permettant d'assurer une fonction de soutirage à la température désirée en plus de la fonction d'injection.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Il est à noter qu'un système de distribution 1 conforme à l'invention peut avantageusement permettre d'assurer à la fois la fonction d'injection de fluide caloporteur dans le stockage, soit de l'extérieur vers l'intérieur du stockage, mais également la fonction de soutirage ou prélèvement de fluide caloporteur depuis le stockage, soit de l'intérieur vers l'extérieur du stockage.

En termes d'injection de fluide caloporteur dans le stockage, l'invention vise à permettre une injection du fluide caloporteur de température donnée au sein d'une strate thermique cible de même température. En outre, en termes de soutirage de fluide caloporteur depuis le stockage, l'invention vise à permettre le prélèvement à la température souhaitée tout en conservant la température la plus élevée dans le stockage afin de limiter les pertes exergétiques et de valoriser ultérieurement cette énergie à un niveau de température supérieure.

Par ailleurs, dans tous les exemples décrits ci-après, on considère que le fluide caloporteur correspond à de l'eau, et que le stockage d'énergie thermique correspond à du stockage d'énergie thermique par chaleur sensible. Toutefois, l'invention pourrait être appliquée à la distribution d'autres types de fluides, tels que des gaz. De plus, elle pourrait également être appliquée à d'autres systèmes de stockage d'énergie thermique, tels que des moyens de stockage de chaleur latente multi-étagés exploitant plusieurs matériaux à changement de phase (MCP) dont les températures de fusion sont différentes, ou encore des moyens de stockage de chaleur sensible utilisant un média de stockage intermédiaire tel que de la roche ou des céramiques et un fluide caloporteur, pouvant être le ou l'un des médias de stockage, tel que de l'eau, de l'huile ou de la vapeur.

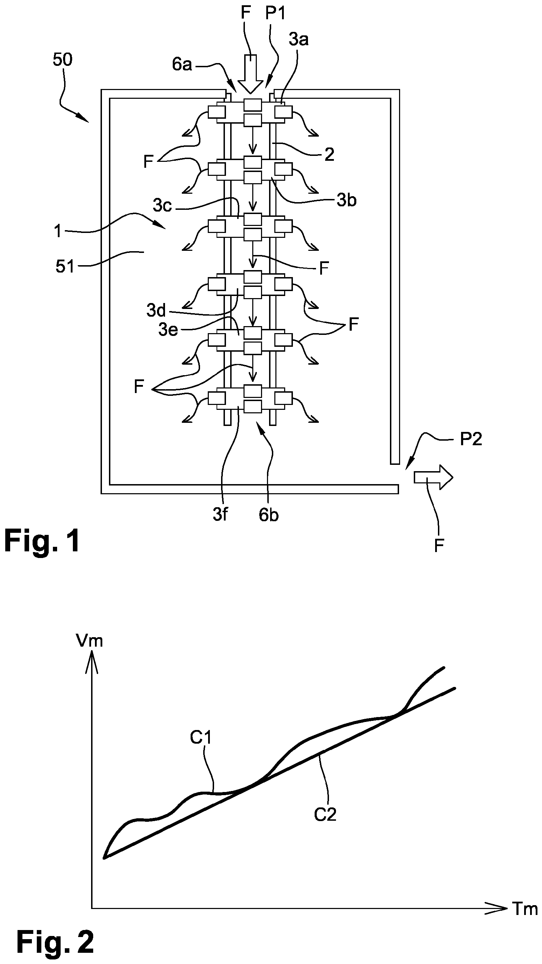

On va tout d'abord décrire, en référence à la figure 1, un exemple de principe d'un dispositif de stockage d'énergie thermique 50 comportant un réservoir de stockage thermique 51 stratifié de fluide caloporteur, qui est ici de type thermocline, et un système de distribution 1 de fluide caloporteur conforme à l'invention, pour l'injection et/ou le soutirage de fluide caloporteur, représenté par les flèches F sur la figure 1, au sein du réservoir de stockage thermique 51.

Le système de distribution 1 comporte tout d'abord un support vertical de distribution 2 de fluide caloporteur F, qui prend par exemple la forme d'une canne de distribution, qui s'étend verticalement à l'intérieur du réservoir de stockage thermique 51 depuis le haut du réservoir 51 au niveau d'un premier passage P1 de fluide caloporteur à haute température, ou encore d'eau « chaude », qui correspond à une entrée d'eau chaude en cas d'injection dans le réservoir 51 (cas de charge) ou à une sortie d'eau chaude en cas de soutirage depuis le réservoir 51 (cas de décharge).

De plus, le réservoir de stockage thermique 51 comporte également, en bas du réservoir 51, un deuxième passage P2 de fluide caloporteur, ou encore d'eau « froide », qui correspond à une sortie d'eau froide en cas d'injection dans le réservoir 51 (cas de charge) ou à une entrée d'eau froide en cas de soutirage depuis le réservoir 51 (cas de décharge).

Le support de distribution 2 comporte en outre, à sa première extrémité située en partie haute du réservoir 51, une première ouverture 6a permettant la distribution de fluide caloporteur F et, à sa deuxième extrémité opposée à la première extrémité et située en partie basse du réservoir 51, une deuxième ouverture 6b débouchante dans le réservoir de stockage thermique 51.

Par ailleurs, le système de distribution 1 comporte également ici six systèmes thermostatiques 3a, 3b, 3c, 3d, 3e et 3f, qui sont fixés au support de distribution 2 et espacés les uns des autres verticalement le long du support de distribution 2, de façon régulière ou non, de sorte à ce que chaque système thermostatique 3a, 3b, 3c, 3d, 3e, 3f soit situé au niveau d'une strate thermique du réservoir de stockage thermique 51 présentant une température différente de celle d'une autre strate thermique.

Comme il sera davantage expliqué en référence aux figures suivantes, chaque système thermostatique 3a, 3b, 3c, 3d, 3e, ,3f comporte un premier thermostat 4a et un deuxième thermostat 4b.

Le premier thermostat 4a est fixé au support de distribution 2 de sorte à être au contact du fluide caloporteur de la strate thermique où est situé ce premier thermostat 4a. Le deuxième thermostat 4b est fixé au support de distribution 2 de sorte à être au contact du fluide caloporteur F à distribuer par le support de distribution 2.

De façon avantageuse, ces thermostats 4a, 4b sont des équipements qui permettent de piloter un système hydraulique en fonction d'une température de consigne. Ainsi, chaque thermostat fonctionne de façon similaire à une vanne qui s'ouvre et se ferme selon la température de l'environnement avec lequel il est en contact.

Ces premier 4a et deuxième 4b thermostats de chaque système thermostatique 3a, 3b, 3c, 3d, 3e, 3f pilotent passivement un système hydraulique en fonction de l'analyse comparative entre la température du fluide caloporteur de la strate thermique où est situé le premier thermostat 4a et la température du fluide caloporteur F à distribuer par le support de distribution 2. Ce pilotage passif est effectué de sorte à permettre la distribution de fluide caloporteur F au sein d'une strate thermique cible du réservoir de stockage thermique 51 de température sensiblement égale à la température du fluide caloporteur F destiné à être distribué. Ainsi, le système de distribution 1 permet de sélectionner passivement la strate thermique où le fluide caloporteur F doit être distribué.

En cas de charge par exemple, ce pilotage passif de l'injection du fluide caloporteur F réalisé par le biais du système de distribution 1 selon l'invention implique deux solutions possibles lorsque le fluide caloporteur F arrive au niveau d'un système thermostatique 3a, 3b, 3c, 3d, 3e, 3f : soit le fluide caloporteur F sort du support de distribution 2 et se retrouve injecté dans la strate thermique cible du réservoir de stockage thermique 51 ; soit le fluide caloporteur F reste dans le support de distribution 2 et poursuit sa progression jusqu'au système thermostatique suivant ou bien alors sort du support de distribution 2 à son niveau le plus bas, c'est-à-dire au niveau de la deuxième ouverture débouchante 6b du support de distribution 2. Autrement dit encore, le fluide caloporteur F va donc sortir du support de distribution 2 lorsque sa température sera supérieure ou égale à la température de la strate thermique au niveau de laquelle est situé le système thermostatique sur lequel le fluide caloporteur F arrive.

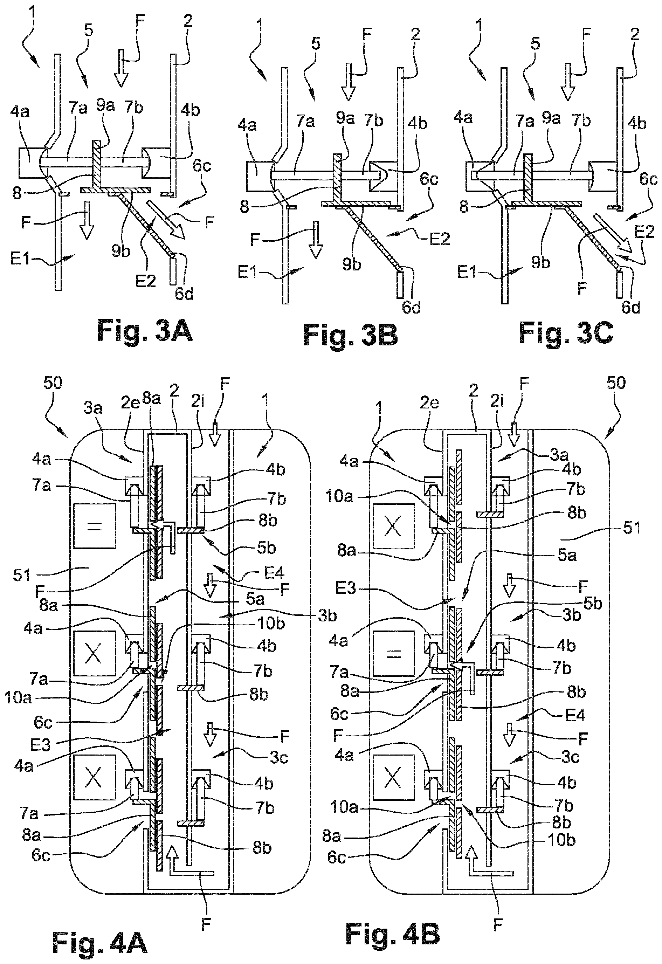

Par ailleurs, comme décrit par la suite à partir de la figure 3A, le premier thermostat 4a d'un système thermostatique 3a, 3b, 3c, 3d, 3e, 3f peut comprendre un premier élément sous forme de tige 7a, notamment une tige métallique. De même, le deuxième thermostat 4b du système thermostatique 3a, 3b, 3c, 3d, 3e, 3f peut comprendre un deuxième élément sous forme de tige 7b, notamment une tige métallique.

Ces tiges métalliques 7a, 7b peuvent interagir avec les premier 4a et deuxième 4b thermostats qui comportent des matériaux de dilatation tels que par exemple des paraffines ou cires. Ces matériaux se caractérisent en ce que leur volume augmente en fonction de leur température. Plus précisément, les premier 4a et deuxième 4b thermostats s'apparentent à des boîtes comportant un matériau de dilatation, tel que de la paraffine, enrobé d'un élément conducteur thermique mais étanche. Ces boîtes comportent un orifice, étanche à la paraffine, par lequel passe la tige métallique 7a, 7b. Lorsque la paraffine est froide, la tige métallique 7a, 7b peut pénétrer profondément dans l'orifice alors que, lorsque la paraffine est chaude, le volume disponible pour la tige métallique 7a, 7b dans la boîte est plus faible, ce qui force la tige métallique 7a, 7b à sortir.

A ce titre, la figure 2 illustre graphiquement l'évolution du volume Vm d'un matériau de dilatation en fonction de la température Tm appliquée au matériau de dilatation. La courbe C1 représente l'évolution réelle du volume Vm en fonction de la température Tm, tandis que la courbe C2 représente la tendance d'évolution croissante du volume Vm en fonction de la température Tm.

Les figures 3A, 3B et 3C représentent trois configurations différentes d'un exemple de système de distribution 1 conforme à l'invention comportant, au niveau de chaque système thermostatique, des premier 4a et deuxième 4b thermostats couplés mécaniquement entre eux.

Plus précisément, dans cet exemple de système de distribution 1, le support de distribution 2 se présente sous une forme générale de cylindre creux destiné à s'étendre verticalement dans le réservoir de stockage thermique 51.

Le premier thermostat 4a est fixé sur la paroi externe du support de distribution 2 et subit la température de la strate thermique où il est situé, et le deuxième thermostat 4b est fixé sur la paroi interne du support de distribution 2 et subit la température du fluide caloporteur F destiné à être distribué. Les premier 4a et deuxième 4b thermostats sont situés à la même altitude correspondant à celle de la strate thermique à laquelle ils sont affectés.

Le premier thermostat 4a comporte une première tige métallique 7a et le deuxième thermostat 4b comporte une deuxième tige métallique 7b.

Les tiges métalliques 7a et 7b prennent en sandwich une première portion 9a d'un élément mobile de distribution 8, par exemple sous la forme d'un boisseau. Dans cet exemple, le système de distribution 1 comporte un unique système hydraulique 5 piloté par les premier 4a et deuxième 4b thermostats, comportant les première 7a et deuxième 7b tiges métalliques ainsi que l'élément mobile de distribution 8.

De plus, l'élément mobile de dilatation 8 comporte une deuxième portion 9b apte à permettre la distribution du fluide caloporteur F au niveau de la strate thermique cible ou un maintien au sein du support de distribution 2. La première portion 9a s'étend verticalement au sein du réservoir de stockage thermique 51 tandis que la deuxième portion 9b s'étend horizontalement au sein du réservoir 51.

Par ailleurs, le support de distribution 2 comporte une ouverture latérale 6c et une paroi centrale 6d, s'étendant depuis cette ouverture latérale 6c vers la deuxième portion 9b de l'élément mobile de distribution 8, au niveau de chaque strate thermique du réservoir de stockage thermique 51. De façon avantageuse, la paroi centrale 6d délimite de part et d'autre de celle-ci un premier espace de passage E1 à l'intérieur du support de distribution 2 et un deuxième espace de passage E2 débouchant sur la strate thermique considérée par le biais de l'ouverture latérale 6c. La deuxième portion 9b de l'élément mobile de distribution 8 est alors apte à fermer le premier espace de passage E1 ou le deuxième espace de passage E2 en fonction du déplacement des premier 7a et deuxième 7b tiges métalliques.

La figure 3A représente une première configuration illustrant le principe de fonctionnement du système de distribution 1. Dans cette configuration, l'élément mobile de distribution 8, pris en sandwich entre les première 7a et deuxième 7b tiges métalliques est approximativement à mi-course de sorte qu'il autorise le passage de fluide caloporteur F à la fois au niveau de la strate thermique des thermostats 4a, 4b par le biais de l'ouverture latérale 6c et également à l'intérieur du support de distribution 2 en direction du système thermostatique suivant ou en sortie du support de distribution 2 par le biais de l'ouverture 6b.

Dans la configuration de la figure 3B, le fluide caloporteur F arrive au niveau du système thermostatique à une température plus froide que la température de la strate thermique dudit système thermostatique. Dans ce cas, le système de distribution 1 doit prévoir de laisser ce fluide caloporteur F s'écouler vers le système thermostatique suivant ou vers la sortie du support de distribution 2. Autrement dit, les thermostats 4a, 4b pilotent le système hydraulique 5 de sorte que la deuxième portion 9b de l'élément mobile de distribution 8 vienne fermer le deuxième espace de passage E2 permettant au fluide caloporteur F d'emprunter uniquement le premier espace de passage E1.

Dans la configuration de la figure 3C, le fluide caloporteur F arrive au niveau du système thermostatique à une température supérieure ou égale à la température de la strate thermique dudit système thermostatique. Dans ce cas, le système de distribution 1 doit prévoir de laisser ce fluide caloporteur F entrer dans la strate thermique qui est alors la strate thermique cible. Autrement dit, les thermostats 4a, 4b pilotent le système hydraulique 5 de sorte que la deuxième portion 9b de l'élément mobile de distribution 8 vienne fermer le premier espace de passage E1 permettant au fluide caloporteur F d'emprunter uniquement le deuxième espace de passage E2 et de s'écouler vers la strate thermique cible par le biais de l'ouverture latérale 6c.

De façon avantageuse, dans cet exemple des figures 3A, 3B et 3C, le système de distribution 1 utilise une seule pièce, l'élément mobile de distribution 8, pour gérer le passage du fluide caloporteur F dans le support de distribution 2.

Il est par ailleurs à noter que des ressorts (non représentés) peuvent être prévus entre la première portion 9a de l'élément mobile de distribution 8 et chaque tige métallique 7a, 7b, permettant notamment d'entraîner le déplacement de chaque tige métallique 7a, 7b.

Ainsi, dans cet exemple, les forces exercées par les deux thermostats 4a et 4b sur l'élément mobile de distribution 8 par le biais respectivement des tiges métalliques 7a, 7b sont en opposition l'une de l'autre. En définitif, on obtient les résultats suivants :
- si le fluide caloporteur F situé dans le support de distribution 2 est plus froid que le fluide situé dans la strate thermique considérée, alors le fluide caloporteur F reste dans le support de distribution 2 jusqu'à la strate thermique suivante ou la sortie du support de distribution 2 ;
- si le fluide caloporteur F situé dans le support de distribution 2 est plus chaud ou de même température que celle du fluide situé dans la strate thermique considérée, alors le fluide caloporteur F est injecté dans cette strate thermique. En effet, cela signifie alors que la température du fluide caloporteur F situé dans le support de distribution 2 se situe entre celle de la strate thermique considérée et celle de la strate thermique supérieure.

Il est à noter ici que si la température du fluide caloporteur F est supérieure à la température de la première strate thermique, à savoir la plus haute, alors le fluide caloporteur F est injecté dans cette première strate thermique.

Par ailleurs, si la température du fluide caloporteur F est inférieure à la température de la dernière strate thermique, à savoir la plus basse, alors le fluide caloporteur F sort du support de distribution 2 par son ouverture 6b en partie basse. En effet, si le support de distribution 2 ne comprenait pas d'ouverture 6b, il pourrait y avoir un risque si aucun système hydraulique 5 ne permettait un écoulement dans une strate thermique en cas de fluide caloporteur F trop froid. Alors, seules des fuites pourraient éventuellement permettre l'écoulement du fluide caloporteur F, ce qui pourrait compromettre les performances du dispositif de stockage d'énergie thermique 50.

Les figures 4A et 4B représentent, schématiquement en coupe, deux configurations différentes d'un autre exemple de dispositif de stockage d'énergie thermique 50 comportant un système de distribution 1 qui n'est pas conforme à l'invention et un réservoir de stockage thermique 51. Dans cet exemple, les premier thermostat 4a et deuxième thermostat 4b de chaque système thermostatique sont découplés mécaniquement l'un de l'autre. Comme précédemment, ces couples de thermostats 4a, 4b sont répartis selon la hauteur du réservoir de stockage thermique 51 et s'actionnent proportionnellement en fonction du niveau de température auxquels ils sont soumis, à savoir la température de l'eau du réservoir 51 dans la strate thermique considérée ou la température de l'eau à distribuer contenue dans le support de distribution 2. Ainsi, chaque niveau du réservoir 51 est piloté passivement par un couple de thermostats 4a, 4b comprenant le premier thermostat 4a au contact de l'eau dans la strate thermique du réservoir 51 et le deuxième thermostat 4b au contact de l'eau distribuée par le support de distribution 2.

De plus, dans cet exemple, le système de distribution 1 comporte trois systèmes thermostatiques 3a, 3b et 3c.

Le support de distribution 2 comporte un tube interne 2i, ou pilier 2i, à l'intérieur d'un tube externe 2e, le tube interne 2i définissant deux chemins de passage E3 et E4 pour le fluide caloporteur F à distribuer, à savoir un chemin de passage E4 de haut en bas, suivi d'un chemin de passage E3 de bas en haut, de sorte que le support de distribution 2 présente une forme d'un serpentin à deux conduits. Ainsi, le fluide caloporteur F s'écoule à l'intérieur du support de distribution 2 et autour du tube interne 2i avant d'atteindre la strate thermique cible.

Au niveau de chaque système thermostatique 3a, 3b, 3c, le premier thermostat 4a est fixé au tube externe 2e du support de distribution 2, tandis que le deuxième thermostat 4b est fixé au tube interne 2i du support de distribution 2. De préférence, les premier 4a et deuxième 4b thermostats sont orientés dans le même sens.

De plus, pour chaque strate thermique du réservoir 51, le système de distribution 1 comporte un premier système hydraulique 5a associé au premier thermostat 4a et un deuxième système hydraulique 5b associé au deuxième thermostat 4b.

Le premier système hydraulique 5a comporte un premier élément mobile de distribution 8a. Cet élément mobile de distribution 8a comporte une première ouverture de passage 10a (ou lumière de passage) et il subit la pression du premier élément sous forme de tige 7a pour le mettre en mouvement.

Le deuxième système hydraulique 5b comporte un deuxième élément mobile de distribution 8b. Cet élément mobile de distribution 8b comporte une deuxième ouverture de passage 10b (ou lumière de passage) et il subit la pression du deuxième élément sous forme de tige 7b pour le mettre en mouvement.

Le fait d'avoir des premier 4a et deuxième 4b thermostats non couplés mécaniquement entre eux implique que les éléments mobiles de distribution 8a et 8b peuvent se déplacer de manière indépendante.

Par ailleurs, le support de distribution 2 comporte une ouverture latérale 6c au niveau de chaque strate thermique du réservoir de stockage thermique 51. Autrement dit, le tube externe 2e du support de distribution 2 est ajouré à chaque niveau piloté pour former des lumières permettant la distribution du fluide caloporteur F dans le réservoir de stockage thermique 51. De façon avantageuse, chaque ouverture latérale 6c présente une section hydraulique dont la hauteur est égale à la course complète du premier thermostat 4a fixé à son niveau.

De façon avantageuse, les premier 8a et deuxième 8b éléments mobiles de distribution peuvent se déplacer sou l'effet respectivement des premier 7a et deuxième 7b éléments sous forme de tige de sorte que la première ouverture de passage 10a, la deuxième ouverture de passage 10b et l'ouverture latérale 6c soient sensiblement en vis-à-vis les unes par rapport aux autres pour permettre au fluide caloporteur F d'être distribué dans la strate thermique cible. Autrement dit encore, la première ouverture de passage 10a, la deuxième ouverture de passage 10b et l'ouverture latérale 6c sont alignées et communicantes les unes avec les autres.

Dans l'exemple de configuration de la figure 4A, la température du fluide caloporteur F à distribuer est égale à la température la plus haute du réservoir 51, soit la température de la zone chaude. Dans ce cas, l'alignement des première 10a et deuxième 10b ouvertures de passage et de l'ouverture latérale 6c du support de distribution 2 va se faire au niveau de la première strate thermique, soit au niveau du premier système thermostatique 3a, ce qui est signifié sur la figure 4A par le symbole « = » tandis que le symbole « X » pour les deuxième 3b et troisième 3c systèmes thermostatiques signifient que le fluide caloporteur F ne peut pas être distribué au niveau des deuxième et troisième strates thermiques.

Dans l'exemple de configuration de la figure 4B, la température du fluide caloporteur F à distribuer est égale à une température intermédiaire pour le réservoir 51. Dans ce cas, l'alignement des première 10a et deuxième 10b ouvertures de passage et de l'ouverture latérale 6c du support de distribution 2 va se faire au niveau de la deuxième strate thermique, soit au niveau du deuxième système thermostatique 3b, ce qui est signifié sur la figure 4B par le symbole « = » tandis que le symbole « X » pour les premier 3a et troisième 3c systèmes thermostatiques signifient que le fluide caloporteur F ne peut pas être distribué au niveau des première et troisième strates thermiques.

Ainsi, le fluide caloporteur F ne peut être distribué dans la strate thermique considérée que si les ouvertures 10a, 10b et 6c sont alignées et communicantes entre elles. Dans le cas contraire, aucun passage vers le réservoir de stockage thermique 51 n'est possible, et alors le fluide caloporteur F est forcé à poursuivre sa progression à l'intérieur du support de distribution 2 vers un niveau de strate thermique inférieur.

Plus généralement, la distribution à un niveau donné de fluide caloporteur F ne peut se faire que si le ou les thermostats 4a en contact avec le fluide du réservoir 51 sont déployés de sorte à aligner la ou les ouvertures 10a avec la ou les ouvertures 10b associées au(x) thermostat(s) 4b en contact avec le fluide caloporteur F à distribuer.

Il est à noter que pour le cas où les thermostats 4a, 4b sont tous identiques et où chacun des thermostats 4a, 4b d'un même couple est fixé à la même hauteur sur le support de distribution 2, alors la distribution de fluide caloporteur F dans la strate thermique cible ne peut se faire que lorsque les éléments sous forme de tige 7a, 7b des thermostats 4a, 4b sont déployés de la même longueur de course.

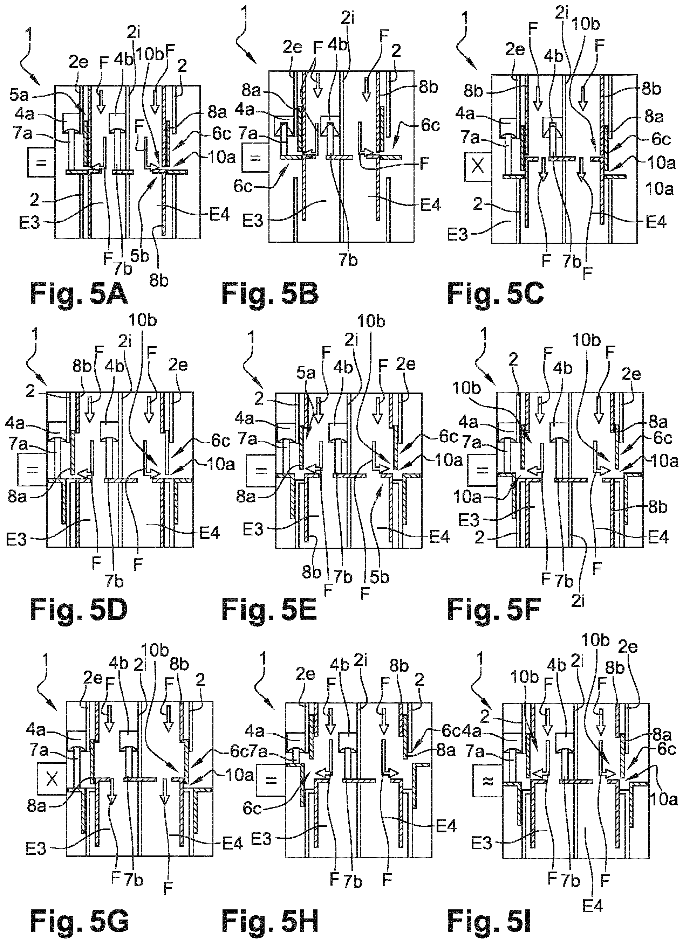

Les figures 5A à 5I représentent, schématiquement en coupe, diverses configurations d'une variante de réalisation du système de distribution 1 des figures 4A et 4B, dans laquelle le premier élément mobile de distribution 8a est constitué par un tube externe coaxial avec le tube interne 2i du support de distribution 2, et dans laquelle le deuxième élément mobile de distribution 8b est constitué par un tube interne coaxial avec le tube interne 2i du support de distribution 2.

En conséquence, pour un niveau donné de strate thermique, le tube externe 2e du support de distribution 2 est ajouré à ses extrémités diamétralement opposées de sorte à former deux ouvertures latérales 6c. De même, le tube externe 8a formé par le premier élément mobile de distribution 8a comporte deux ouvertures de passage 10a, et le tube interne 8b formé par le deuxième élément mobile de distribution 8b comporte deux ouvertures de passage 10b.

Dans l'exemple de configuration de la figure 5A, la température du fluide caloporteur F à distribuer est égale à la température la plus haute du réservoir 51, soit la température de la zone chaude. Dans ce cas, l'alignement des première 10a et deuxième 10b ouvertures de passage et des ouvertures latérales 6c du support de distribution 2 va se faire au niveau de la première strate thermique, ce qui est signifié sur la figure 5A par le symbole « = ».

Dans l'exemple de configuration de la figure 5B, la température du fluide caloporteur F à distribuer est égale à la température de la strate thermique au niveau de laquelle le fluide caloporteur F arrive. Dans ce cas, l'alignement des première 10a et deuxième 10b ouvertures de passage et des ouvertures latérales 6c du support de distribution 2 va se faire au niveau de cette strate thermique, ce qui est signifié sur la figure 5B par le symbole « = ».

Dans l'exemple de configuration de la figure 5C, la température du fluide caloporteur F à distribuer est plus froide que la température de la strate thermique au niveau de laquelle le fluide caloporteur F arrive. Dans ce cas, l'alignement des première 10a et deuxième 10b ouvertures de passage et des ouvertures latérales 6c du support de distribution 2 n'est pas réalisé de sorte à empêcher au fluide caloporteur F d'être distribué au niveau de cette strate thermique et à continuer sa progression dans le support de distribution 2, ce qui est signifié sur la figure 5C par le symbole « X ».

Les figures 5D à 5I permettent d'illustrer des configurations particulières du système de distribution 1 pas conforme à l'invention applicables notamment au premier niveau de strate thermique (le plus haut) et au dernier niveau de strate thermique (le plus bas).

En effet, le système de distribution 1 selon l'invention doit avantageusement pouvoir fonctionner en toute circonstance, et notamment lorsque le réservoir de stockage thermique 51 est à une température homogène basse, qui est par exemple la conséquence d'une décharge complète ou encore d'un arrêt prolongé ayant significativement dénaturé la stratification thermique interne. Il est donc possible d'être confronté à des situations où, lors du démarrage de la charge, la température de l'eau injectée est supérieure à la température de l'eau de la partie supérieure du réservoir de stockage thermique 51.

Dans l'exemple de configuration de la figure 5D, il est illustré l'état du premier niveau de strate thermique lorsque le fluide caloporteur 1 entre aussi chaud que celui contenu dans la strate thermique supérieure. Plus particulièrement dans ce cas, la température d'injection et celle de la strate thermique sont supérieures ou égales à la température maximale de pilotage des thermostats 4a, 4b, ce qui conduit à une condition de déploiement complet des éléments sous forme de tige 7a, 7b. Dans cette situation, l'eau injectée est distribuée dans la strate correspondant à ce premier niveau, car les ouvertures de passage 10a, 10b des éléments mobiles de distribution 8a, 8b laissent apparaître un passage communicant.

Dans l'exemple de configuration de la figure 5E, il est illustré l'état du premier niveau de strate thermique lorsque le fluide caloporteur F entre aussi chaud que celui qui est contenu dans la strate supérieure. Plus particulièrement dans ce cas, la température d'injection et celle de la strate thermique sont dans la plage de pilotage des thermostats 4a, 4b, ce qui conduit à une condition de déploiement intermédiaire et égal des éléments sous forme de tige 7a, 7b. Dans cette situation, l'eau injectée est distribuée dans la strate correspondant à ce premier niveau, car les ouvertures de passage 10a, 10b des éléments mobiles de distribution 8a, 8b laissent apparaître un passage communicant.

Dans l'exemple de configuration de la figure 5F, il est illustré l'état du premier niveau de strate thermique lorsque le fluide caloporteur F entre plus chaud que celui qui est contenu dans la strate supérieure. Il s'agit d'un cas particulier qui peut justifier une adaptation du premier niveau du système de distribution 1 pour permettre l'injection au plus haut niveau du réservoir 51, d'une eau plus chaude que celle initialement présente dans la zone supérieure. Pour remplir cette fonction, il est possible d'adapter deux hauteurs différentes pour chacune des ouvertures de passage 10a, 10b présentes sur les éléments mobiles 8a, 8b du premier niveau. Ainsi, l'ouverture de passage 10b peut être plus haute, autrement dit plus importante, que l'ouverture de passage 10a, comme représenté. Dans cette configuration, les ouvertures de passage 10a, 10b des éléments mobiles 8a, 8b de ce premier niveau laissent apparaître un passage communicant, même si dans ce cas précis la différence de température perçue par les thermostats 4a, 4b de chaque élément mobile 8a, 8b conduit à une contraction du thermostat 4a en contact avec l'eau du réservoir 51 et à une détente du thermostat 4b en contact avec l'eau injectée.

Dans l'exemple de configuration de la figure 5G, il est illustré l'état du premier niveau de strate thermique lorsque le fluide caloporteur F entre plus froid que celui qui est contenu dans la strate supérieure. Plus particulièrement dans ce cas, la température d'injection est très inférieure à celle de la strate thermique, ce qui conduit à une condition de verrouillage de la distribution pour ne pas attenter la stratification thermique du réservoir 51. Dans cette situation, l'eau injectée n'est pas distribuée dans la strate thermique et poursuit donc sa progression au niveau suivant. Par rapport au fonctionnement du système de distribution 1, le verrouillage de la distribution est matérialisé par un désalignement des ouvertures de passage 10a, 10b des deux éléments mobiles 8a, 8b, gouverné par l'action antagoniste des thermostats 4a, 4b de ce niveau. Le thermostat 4a en contact avec l'eau du réservoir 51 a alors une position plus détendue que le thermostat 4b en contact avec l'eau injectée, davantage comprimé.

Dans l'exemple de configuration de la figure 5H, il est illustré l'état du premier niveau de strate thermique lorsque le fluide caloporteur F entre beaucoup plus chaud que celui qui est contenu dans la strate supérieure. Il s'agit d'un second cas particulier qui peut justifier une adaptation du premier niveau du système de distribution 1 pour permettre l'injection au plus haut niveau du réservoir 51, d'une eau plus chaude que celle initialement présente dans la zone supérieure. Ce cas est par exemple rencontré lors du démarrage d'une charge qui succède à une décharge complète du dispositif de stockage d'énergie thermique 50. Ainsi, l'ouverture de passage 10b peut être plus haute, autrement dit plus importante, que l'ouverture de passage 10a, comme représenté. Dans cette configuration, les ouvertures de passage 10a, 10b des éléments mobiles 8a, 8b de ce premier niveau laissent apparaître un passage communicant, même si dans ce cas précis la différence de température perçue par les thermostats 4a, 4b de chaque élément mobile 8a, 8b conduit à une contraction du thermostat 4a en contact avec l'eau du réservoir 51 et à une détente du thermostat 4b en contact avec l'eau injectée. Pour améliorer encore la distribution hydraulique de ce cas, il est possible de réaliser un décalage entre les éléments mobiles 8a, 8b pour former une chambre de communication, afin d'assurer la distribution du fluide caloporteur F vers le réservoir 51.

Dans l'exemple de configuration de la figure 5I, il est illustré l'état du premier niveau de strate thermique lorsque le fluide caloporteur F entre légèrement froid que celui qui est contenu dans la strate supérieure. En temps normal, cette situation conduirait au verrouillage de la distribution vers le réservoir 51 pour ne pas attenter la stratification thermique du réservoir 51. Cela dit, il est possible que dans certains cas où la température du fluide caloporteur F injecté est légèrement plus faible que celle de la strate thermique, une distribution hydraulique vers le réservoir 51 apparaisse. Cette distribution non souhaitable car elle peut conduire à une légère dégradation de la zone chaude supérieure, s'explique par le fonctionnement permissible souhaité par le système de distribution 1, pour que la distribution hydraulique soit possible lorsque la température de l'eau injecté se trouve entre deux niveaux de stratification du réservoir 51 pilotés. Concrètement, ce caractère permissible du système de distribution 1 observé dans ce cas est consécutif à la géométrie des ouvertures de passage 10a, 10b. Ainsi, si la hauteur de l'ouverture de passage 10a est plus élevée que la différence de course entre le thermostat 4a et le thermostat 4b, une partie, ou la totalité, du débit injecté dans le système 1 sera distribué dans le réservoir 51, malgré sa température légèrement plus faible, ce qui est signifié par le symbole « ≈ » sur la figure 5I.

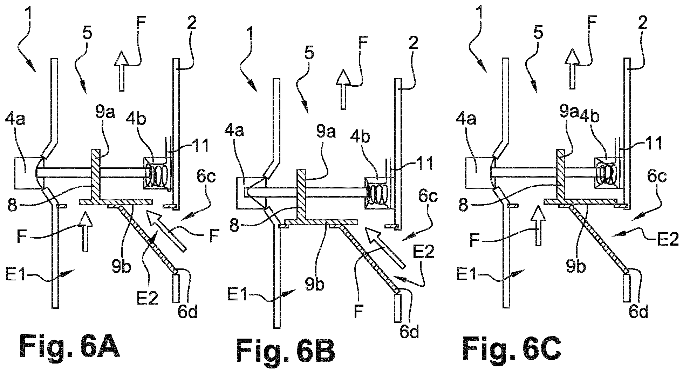

On va maintenant décrire, en référence aux figures 6A, 6B et 6C, une adaptation du système de distribution 1 selon l'invention décrit précédemment en référence aux figures 3A, 3B et 3C pour permettre le soutirage de fluide caloporteur F.

Le système de distribution 1 selon l'invention peut être utilisé pour réaliser une charge à température constante ou variable, mais il peut être utilisé aussi pour réaliser une décharge à température variable. Par exemple, si de l'eau est stockée à une température comprise entre 65°C et 90°C, l'un des besoins peut nécessiter une eau à 45°C et un autre des besoins peut nécessiter une eau à 90°C, il est alors dommage de puiser l'eau à 90°C pour le besoin à 45°C.

Ainsi, comme représenté sur les figures 6A, 6B et 6C, l'un au moins des thermostats 4a, 4b, ici le deuxième thermostat 4b, peut comporter une résistance électrique intégrée 11. Cette résistance électrique intégrée 11 peut permettre de forcer l'ouverture de la bonne strate thermique et de fermer la circulation dans les niveaux inférieurs de strates thermiques. Plus précisément, si la température de l'eau en sortie du système de distribution 1 est inférieure à la température de consigne, alors la résistance électrique intégrée 11 est coupée au profit de l'alimentation de celle du niveau de strate thermique supérieure, et ainsi de suite.

Il est à noter qu'avant que ce mode de fonctionnement soit activé, il peut être nécessaire d'injecté une faible quantité de fluide froid à partir du haut du système de distribution 1 afin de provoquer la fermeture de l'ensemble des systèmes thermostatiques pour permettre au fluide caloporteur F de circuler dans l'ensemble du support de distribution 2.

La figure 6A représente une première configuration illustrant le principe de fonctionnement du système de distribution 1. Dans cette configuration, l'élément mobile de distribution 8, pris en sandwich entre les première 7a et deuxième 7b tiges métalliques est approximativement à mi-course de sorte qu'il autorise le soutirage de fluide caloporteur F à la fois depuis la strate thermique des thermostats 4a, 4b par le biais de l'ouverture latérale 6c et également depuis l'intérieur du support de distribution 2 en provenance du système thermostatique suivant ou depuis la sortie du support de distribution 2 par le biais de l'ouverture 6b.

Dans la configuration de la figure 6B, la température de consigne du fluide caloporteur F à soutirer est sensiblement égale à celle de la strate thermique considérée de sorte que la résistance électrique intégrée 11 permette, par exemple par alimentation d'une bobine de chauffe, l'ouverture de l'espace de passage E2 pour obtenir le soutirage de fluide caloporteur F à la température de consigne.

Dans la configuration de la figure 6C, la consigne étant d'avoir une eau plus froide que dans une strate thermique du réservoir 51, la fermeture des espaces de passage E2 est réalisée naturellement sans alimentation électrique pour soutirer le fluide caloporteur F depuis le support de distribution 2 directement.

Il est à noter qu'une variante de ce principe peut consister en l'usage d'une circulation de type « charge » à la température de consigne souhaitée permettant ainsi de n'ouvrir que la strate thermique concernée avant de repasser en mode « décharge ».

## Revendications

1. Système de distribution (1) de fluide caloporteur (F) pour un dispositif de stockage d'énergie thermique (50) comportant un réservoir de stockage thermique (51) stratifié de fluide caloporteur, pour l'injection et/ou le soutirage de fluide caloporteur (F) au sein du réservoir de stockage thermique (51), **caractérisé en ce qu'**il comporte :
- un support de distribution (2) de fluide caloporteur (F), destiné à s'étendre à l'intérieur du réservoir de stockage thermique (51) et apte à permettre l'injection et/ou le soutirage de fluide caloporteur (F) au sein du réservoir de stockage thermique (51),
- au moins deux systèmes thermostatiques (3a-3f), solidarisés audit support de distribution (2) et espacés le long dudit support de distribution (2) de sorte à être situés au niveau de strates thermiques du réservoir de stockage thermique (51) présentant des températures différentes,
chaque système thermostatique (3a-3f) comportant au moins un premier thermostat (4a) et un deuxième thermostat (4b), le premier thermostat (4a) étant solidarisé audit support de distribution (2) de sorte à être au contact du fluide caloporteur de la strate thermique où est situé le système thermostatique (3a-3f) et le deuxième thermostat (4b) étant solidarisé audit support de distribution (2) de sorte à être au contact du fluide caloporteur (F) à distribuer par le support de distribution (2),
le premier thermostat (4a) et le deuxième thermostat (4b) de chaque système thermostatique (3a-3f) pilotant passivement au moins un système hydraulique (5, 5a, 5b) du système de distribution (1) en fonction de la comparaison de la température du fluide caloporteur de la strate thermique où est situé le premier thermostat (4a) et de la température du fluide caloporteur (F) à distribuer par le support de distribution (2) pour permettre la distribution de fluide caloporteur (F) au sein d'une strate thermique cible du réservoir de stockage thermique (51) de température sensiblement égale à la température du fluide caloporteur (F) destiné à être distribué,
ledit au moins un système hydraulique (5, 5a, 5b) comportant un premier élément sous forme de tige (7a) solidarisé au premier thermostat (4a) et un deuxième élément sous forme de tige (7b) solidarisé au deuxième thermostat (4b), les premier (7a) et deuxième (7b) éléments sous forme de tige étant aptes à se déplacer en fonction de la température appliquée respectivement aux premier (4a) et deuxième (4b) thermostats sous l'effet de la dilatation d'un matériau de dilatation des premier (4a) et deuxième (4b) thermostats, le premier thermostat (4a) et le deuxième thermostat (4b) de chaque système thermostatique (3a-3f) étant couplés mécaniquement entre eux, le système hydraulique (5) comportant un élément mobile de distribution (8) comprenant une première portion (9a) sur laquelle les premier (7a) et deuxième (7b) éléments sous forme de tige exercent une pression de part et d'autre de ladite première portion (9a) et une deuxième portion (9b) apte à permettre la distribution du fluide caloporteur (F) au niveau de la strate thermique cible ou un maintien au sein du support de distribution (2), le support de distribution (2) comportant un ouverture latérale (6c) et une paroi centrale (6d), s'étendant depuis cette ouverture latérale (6c) vers la deuxième portion (9b) de l'élément mobile de distribution (8), au niveau de chaque strate thermique du réservoir de stockage thermique (51), la paroi centrale (6d) délimitant de part et d'autre un premier espace de passage (E1) à l'intérieur du support de distribution (2) et un deuxième espace de passage (E2) débouchant sur la strate thermique considérée par le biais de l'ouverture latérale (6c), la deuxième portion (9b) de l'élément mobile de distribution (8) étant apte à fermer le premier espace de passage (E1) ou le deuxième espace de passage (E2) en fonction du déplacement des premier (7a) et deuxième (7b) éléments sous forme de tige.

2. Système selon la revendication 1, **caractérisé en ce que** le support de distribution (2) comporte, à une première de ses extrémités destinée à être située en partie haute du réservoir de stockage thermique (51), une première ouverture (6a) permettant la distribution de fluide caloporteur (F) et, à une deuxième de ses extrémités, opposée à la première extrémité et destinée à être située en partie basse du réservoir de stockage thermique (51), une deuxième ouverture (6b) débouchante dans le réservoir de stockage thermique (51).

3. Système selon la revendication 1 ou 2, **caractérisé en ce qu'**au moins l'un des premier (4a) et deuxième (4b) thermostats, notamment le deuxième thermostat (4b), comporte une résistance électrique intégrée (11) apte à permettre le soutirage de fluide caloporteur (F) en fonction d'une température de consigne de fluide caloporteur (F).

4. Dispositif de stockage d'énergie thermique (50), **caractérisé en ce qu'**il comporte :
- un réservoir de stockage thermique (51) stratifié comportant un fluide caloporteur pour le stockage d'énergie thermique, et
- un système de distribution (1) de fluide caloporteur selon l'une quelconque des revendications précédentes, s'étendant à l'intérieur du réservoir de stockage thermique (51) pour l'injection et/ou le soutirage de fluide caloporteur.

5. Dispositif selon la revendication 4, **caractérisé en ce qu'**il est un dispositif de stockage d'énergie thermique par chaleur sensible.

6. Procédé de distribution de fluide caloporteur dans un dispositif de stockage d'énergie thermique (50), comportant un réservoir de stockage thermique (51) stratifié de fluide caloporteur, pour l'injection et/ou le soutirage de fluide caloporteur au sein du réservoir de stockage thermique (51), **caractérisé en ce qu'**il est mis en œuvre au moyen d'un système de distribution (1) selon l'une quelconque des revendications 1 à 3.

7. Procédé selon la revendication 6, **caractérisé en ce qu'**il comporte l'étape consistant à injecter un fluide caloporteur dans une strate thermique du réservoir de stockage thermique de même température que le fluide caloporteur par le biais du système de distribution (1).

8. Procédé selon la revendication 6 ou 7, **caractérisé en ce qu'**il comporte l'étape consistant à soutirer un fluide caloporteur de température prédéterminée depuis une strate thermique du réservoir de stockage thermique de même température que le fluide caloporteur par le biais du système de distribution (1).

## Patentansprüche

1. System (1) zur Verteilung von Wärmeträgerfluid (F) für eine Vorrichtung (50) zur Speicherung von Wärmeenergie, umfassend ein Schichtwärmespeicherreservoir (51) für das Wärmeträgerfluid für die Injektion und/oder die Entnahme von Wärmeträgerfluid (F) innerhalb des Wärmespeicherreservoirs (51), **dadurch gekennzeichnet, dass** es umfasst:
- einen Verteilungsträger (2) für das Wärmeträgerfluid (F), der dazu ausgelegt ist, sich innerhalb des Wärmespeicherreservoirs (51) zu erstrecken und dazu geeignet ist, die Injektion und/oder die Entnahme von Wärmeträgerfluid (F) innerhalb des Wärmespeicherreservoirs (51) zu ermöglichen,
- wenigstens zwei Thermostatsysteme (3a-3f), die mit dem Verteilungsträger (2) verbunden und entlang des Verteilungsträgers (2) derart beabstandet sind, dass sie im Bereich von Wärmeschichten des Wärmespeicherreservoirs (51) angeordnet sind, die verschiedene Temperaturen aufweisen,
wobei jedes Thermostatsystem (3a-3f) wenigstens einen ersten Thermostat (4a) und einen zweiten Thermostat (4b) umfasst, wobei der erste Thermostat (4a) mit dem Verteilungsträger (2) derart verbunden ist, dass er in Kontakt ist mit Wärmeträgerfluid der Wärmeschicht, wo das Thermostatsystem (3a-3f) angeordnet ist, und der zweite Thermostat (4b) mit dem Verteilungsträger (2) derart verbunden ist, dass er in Kontakt ist mit Wärmeträgerfluid (F), das durch den Verteilungsträger (2) zu verteilen ist,
wobei der erste Thermostat (4a) und der zweite Thermostat (4b) jedes Thermostatsystems (3a-3f) passiv wenigstens ein hydraulisches System (5, 5a, 5b) des Verteilungssystems (1) als Funktion des Vergleichs der Temperatur des Wärmeträgerfluids der Wärmeschicht, wo der erste Thermostat (4a) angeordnet ist, und der Temperatur des Wärmeträgerfluids (F) steuern, das durch das Verteilungssystem (2) zu verteilen ist, um die Verteilung des Wärmeträgerfluids (F) innerhalb einer Zielwärmeschicht des Wärmespeicherreservoirs (51) mit einer Temperatur im Wesentlichen gleich der Temperatur des Wärmeträgerfluids (F) zu ermöglichen, das verteilt werden soll,
wobei das wenigstens eine hydraulische System (5, 5a, 5b) ein erstes Element in Form einer Stange (7a) umfasst, das mit dem ersten Thermostat (4a) verbunden ist, und ein zweites Element in Form einer Stange (7b), das mit dem zweiten Thermostat (4b) verbunden ist, wobei das erste (7a) und das zweite (7b) Element in Form einer Stange dazu ausgelegt sind, sich als Funktion der Temperatur, die an den ersten (4a) beziehungsweise den zweiten (4b) Thermostat angelegt wird, unter dem Effekt der Ausdehnung eines Ausdehnungsmaterials des ersten (4a) und des zweiten (4b) Thermostaten zu verlagern,
wobei der erste Thermostat (4a) und der zweite Thermostat (4b) jedes Thermostatsystems (3a-3f) mechanisch miteinander gekoppelt sind, wobei das hydraulische System (5) ein mobiles Verteilungselement (8) umfasst, umfassend einen ersten Bereich (9a), auf den das erste (7a) und das zweite (7b) Element in Form einer Stange einen Druck auf beiden Seiten des ersten Bereichs (9a) ausüben, und einen zweiten Bereich (9b), der dazu ausgelegt ist, die Verteilung von Wärmeträgerfluid (F) im Bereich der Zielwärmeschicht oder ein Halten innerhalb des Verteilungsträgers (2) zu ermöglichen, wobei der Verteilungsträger (2) eine laterale Öffnung (6c) und eine zentrale Wand (6d) umfasst, die sich ausgehend von dieser lateralen Öffnung (6c) in Richtung des zweiten Bereichs (9b) des mobilen Verteilungselements (8) im Bereich jeder Wärmeschicht des Wärmespeicherreservoirs (51) erstreckt, wobei die zentrale Wand (6d) auf beiden Seiten einen ersten Durchgangsraum (E1) innerhalb des Verteilungsträgers (2) und einen zweiten Durchgangsraum (E2) begrenzt, der mittels der lateralen Öffnung (6c) in die betrachtete Wärmeschicht mündet, wobei der zweite Bereich (9b) des mobilen Verteilungselements (8) dazu ausgelegt ist, den ersten Durchgangsraum (E1) oder den zweiten Durchgangsraum (E2) als Funktion der Verlagerung des ersten (7a) und des zweiten (7b) Elements in Form einer Stange zu schließen.

2. System nach Anspruch 1, **dadurch gekennzeichnet, dass** der Verteilungsträger (2) an einem ersten seiner Enden, das dazu ausgelegt ist, in einem oberen Bereich des Wärmespeicherreservoirs (51) angeordnet zu sein, eine erste Öffnung (6a) umfasst, die die Verteilung von Wärmeträgerfluid (F) ermöglicht, und an einem zweiten seiner Enden entgegengesetzt zu dem ersten Ende und dazu ausgelegt, in einem unteren Bereich des Wärmespeicherreservoirs (51) angeordnet zu sein, eine zweite Öffnung (6b), die in das Wärmespeicherreservoir (51) mündet.

3. System nach Anspruch 1 oder 2, **dadurch gekennzeichnet**, das der erste (4a) und/oder der zweite (4b) Thermostat, insbesondere der zweite Thermostat (4b), einen integrierten elektrischen Widerstand (11) umfasst, der dazu ausgelegt ist, die Entnahme von Wärmeträgerfluid (F) als Funktion einer Solltemperatur des Wärmeträgerfluids (F) zu ermöglichen.

4. Vorrichtung (50) zur Speicherung von Wärmeenergie, **dadurch gekennzeichnet, dass** sie umfasst:
- ein Schichtwärmespeicherreservoir (51), das ein Wärmeträgerfluid für die Speicherung von Wärmeenergie umfasst, und
- ein System (1) zur Verteilung von Wärmeträgerfluid nach einem der vorhergehenden Ansprüche, das sich innerhalb des Wärmespeicherreservoirs (51) erstreckt, für die Injektion und/oder die Entnahme von Wärmeträgerfluid.

5. Vorrichtung nach Anspruch 4, **dadurch gekennzeichnet, dass** sie eine Vorrichtung zur Speicherung von Wärmeenergie mittels fühlbarer Wärme ist.

6. Verfahren zur Verteilung von Wärmeträgerfluid in einer Vorrichtung (50) zur Speicherung von Wärmeenergie, umfassend ein Schichtwärmespeicherreservoir (51) für Wärmeträgerfluid für die Injektion und/oder die Entnahme von Wärmeträgerfluid innerhalb des Wärmespeicherreservoirs (51), **dadurch gekennzeichnet, dass** es mit Hilfe eines Verteilungssystems (1) nach einem der Ansprüche 1 bis 3 durchgeführt wird.

7. Verfahren nach Anspruch 6, **dadurch gekennzeichnet, dass** es den Schritt umfasst, der darin besteht, ein Wärmeträgerfluid in eine Wärmeschicht des Wärmespeicherreservoirs mit der gleichen Temperatur wie das Wärmeträgerfluid mittels des Verteilungssystems (1) zu injizieren.

8. Verfahren nach Anspruch 6 oder 7, **dadurch gekennzeichnet, dass** es den Schritt umfasst, der darin besteht, ein Wärmeträgerfluid mit einer vorbestimmten Temperatur aus einer Wärmeschicht des Wärmespeicherreservoirs mit der gleichen Temperatur wie das Wärmeträgerfluid mittels des Verteilungssystems (1) zu entnehmen.

## Claims

1. A system for dispensing (1) a coolant (F) for a thermal energy storage device (50) including a stratified thermal storage tank (51) for coolant, for injecting and/or withdrawing a coolant (F) within a thermal storage tank (51), **characterised in that** it includes:
- a support for dispensing (2) coolant (F), for extending inside the thermal energy storage tank (51) and able to enable the coolant (F) to be injected and/or withdrawn within the thermal storage tank (51),
- at least two thermostatic systems (3a-3f), secured to said dispensing support (2) and spaced apart along said dispensing support (2) so as to be located at thermal strata of the thermal storage tank (51) having different temperatures,
each thermostatic system (3a-3f) including at least one first thermostat (4a) and a second thermostat (4b), the first thermostat (4a) being secured to said dispensing support (2) so as to be in contact with the coolant of the thermal stratum where the thermostatic system (3a-3f) is located and the second thermostat (4b) being secured to said dispensing support (2) so as to be in contact with the coolant (F) to be dispensed by the dispensing support (2),
the first thermostat (4a) and the second thermostat (4b) of each thermostatic system (3a-3f) passively driving at least one hydraulic system (5, 5a, 5b) of the dispensing system (1) as a function of the comparison of the coolant temperature of the thermal stratum where the first thermostat (4a) is located and of the temperature of the coolant (F) to be dispensed by the dispensing support (2) to enable coolant (F) to be dispensed within a target thermal stratum of the thermal storage tank (51) with a temperature substantially equal to the temperature of the coolant (F) for being dispensed,
said at least one hydraulic system (5, 5a, 5b) including a first rod-shaped element (7a) secured to the first thermostat (4a) and a second rod-shaped element (7b) secured to the second thermostat (4b), the first (7a) and second (7b) rod-shaped elements being able to move as a function of the temperature respectively applied to the first (4a) and second (4b) thermostats under the effect of the expansion of an expansion material of the first (4a) and second (4b) thermostats,
the first thermostat (4a) and the second thermostat (4b) of each thermostatic system (3a-3f) being mechanically coupled to each other, the hydraulic system (5) including a first dispensing movable element (8) comprising a first portion (9a) on which the first (7a) and second (7b) rod-shaped elements exert a pressure on either side of said first portion (9a) and a second portion (9b) able to enable the coolant (F) to be dispensed at the target thermal stratum or to be held within the dispensing support (2), the dispensing support (2) including a side opening (6c) and a central wall (6d), extending from this side opening (6c) towards the second portion (9b) of the dispensing movable element (8), at each thermal stratum of the thermal storage tank (51), the central wall (6d) delimiting on either side a first pass-through space (E1) inside the dispensing support (2) and a second pass-through space (E2) opening into the thermal stratum considered through the side opening (6c), the second portion (9b) of the dispensing movable element (8) being able to close the first pass-through space (E1) or the second pass-through space (E2) as a function of the movement of the first (7a) and second (7b) rod-shaped elements.

2. The system according to claim 1, **characterised in that** the dispensing support (2) includes, at a first one of its ends for being located at a top part of the thermal storage tank (51), a first opening (6a) enabling coolant (F) to be dispensed and, at a second one of its ends, opposite the first end and for being located at a bottom part of the thermal storage tank (51), a second opening (6b) opening into the thermal storage tank (51).

3. The system according to claim 1 or 2, **characterised in that** at least one of the first (4a) and second (4b) thermostats, especially the second thermostat (4b), includes an integrated resistor (11) able to enable the coolant (F) to be withdrawn as a function of a temperature setting of the coolant (F).

4. A thermal energy storage device (50), **characterised in that** it includes:
- a stratified thermal storage tank (51) including a coolant for storing thermal energy, and
- a coolant dispensing system (1) according to any of the previous claims, extending inside the thermal storage tank (51) for injecting and/or withdrawing coolant.

5. A device according to claim 4, **characterised in that** it is a sensible-heat thermal energy storage device.

6. A method for dispensing coolant in a thermal energy storage device (50), including a coolant stratified thermal storage tank (51), for injecting and/or withdrawing coolant within a thermal storage tank (51), **characterised in that** it is implemented by means of a dispensing system (1) according to any of claims 1 to 3.

7. The method according to claim 6, **characterised in that** it includes the step of injecting a coolant into a thermal stratum of the thermal storage tank with a same temperature as the coolant through the dispensing system (1).

8. The method according to claim 6 or 7, **characterised in that** it includes the step of withdrawing a coolant with a predetermined temperature from a thermal stratum of the thermal storage tank with a same temperature as the coolant through the dispensing system (1).
